# EUROPÄISCHE PATENTSCHRIFT

(11) **EP 3 387 265 B1**
(45) Veröffentlichungstag und Bekanntmachung des Hinweises auf die Patenterteilung: **16.12.2020**
(21) Anmeldenummer: 16781138.9
(22) Anmeldetag: 13.10.2016
(51) Int. Cl.: F15B 13/02, F15B 11/16, F16H 61/00, F16D 21/00, F01L 1/344, F16D 48/02

(54) **HYDRAULIKANORDNUNG UND KRAFTFAHRZEUGANTRIEBSSTRANG**
HYDRAULIC ARRANGEMENT AND MOTOR-VEHICLE DRIVETRAIN
SYSTÈME HYDRAULIQUE ET CHAÎNE CINÉMATIQUE DE VÉHICULE AUTOMOBILE

(30) Priorität: 11.12.2015 DE 102015121572
(43) Veröffentlichungstag der Anmeldung: 17.10.2018
(73) Patentinhaber: Magna PT B.V. & Co. KG, 74199 Untergruppenbach (DE)
(72) Erfinder: KÜHNER, Michael, 74078 Heilbronn (DE); SCHUSTER, Sven, 74399 Walheim (DE); SPIELER, Jan, 74382 Neckarwestheim (DE)
(74) Vertreter: Rausch, Gabriele
(86) Internationale Anmeldenummer: PCT/EP2016/074619
(87) Internationale Veröffentlichungsnummer: WO 2017/097470

(56) Entgegenhaltungen:
- EP-A2- 2 933 519
- WO-A1-2012/125320
- DE-A1- 19 719 636
- DE-A1-102011 119 414
- DE-A1-102014 019 076

## Beschreibung

Die vorliegende Erfindung betrifft eine Hydraulikanordnung für einen Kraftfahrzeugantriebsstrang gemäß Anspruch 1.

Ferner betrifft die vorliegende Erfindung einen Antriebsstrang für ein Kraftfahrzeug, mit einer derartigen Hydraulikanordnung.

Bekannte Hydraulikanordnungen der oben beschriebenen Art verwenden als Verteilungseinrichtung häufig ein elektrisch betriebenes Ventil, das mittels einer geeigneten Ansteuerung, beispielsweise von einem Antriebsstrangsteuergerät wie einem Getriebesteuergerät, dazu angesteuert wird, den Gesamt-Volumenstrom geeignet aufzuteilen. Ein derartiges elektrisch betriebenes Ventil kann beispielsweise als Wegeventil ausgebildet sein.

Aus dem Dokument DE 10 2013 110 400 A1 ist es bekannt, einen Druckanschluss einer Pumpe mit einem Eingang eines solchen Wegeventils zu verbinden, und weitere Anschlüsse einer derartigen Pumpe, die beispielsweise ein Ringelement beinhalten kann, mit hydraulischen Ansteueranschlüssen dieses Ventils zu verbinden, um unterschiedliche hydraulische Verbraucher bedarfsweise mit Fluid zu versorgen.

Ferner offenbart dieses Dokument, bei einer Innenzahnradpumpe mit einem verschwenkbaren Ringelement, dieses Ringelement als Ventilschieber zu verwenden.

Ventile, die elektrisch angesteuert sind, erfordern entsprechende Ausgangsanschlüsse an einem Steuergerät. Pumpen, die ein Ringelement aufweisen, das zwischen zwei verschiedenen Positionen hin und her verschwenkbar ist, sind vergleichsweise teuer und komplex in der Herstellung.

Aus dem Dokument DE 10 2009 023 596 A1 ist ein Volumenstromregelventil einer Hydraulikanordnung eines Kraftfahrzeuges bekannt. Das dort offenbarte Volumenstromregelventil soll zum Abriegeln eines Volumenstromes geeignet sein. Insbesondere weist das Ventil einen Steuerkolben zur Beeinflussung des Volumenstroms auf, wobei der Steuerkolben eine erste Druckfläche und eine entgegengesetzte zweite Druckfläche aufweist, wobei ein hydraulischer Widerstand der ersten Druckfläche nachgeschaltet und der zweiten Druckfläche vorgeschaltet ist. Der hydraulische Widerstand ist eine Drossel oder weist deren Eigenschaften auf. Hierdurch soll eine Temperaturkompensation erreichbar sein.

Die DE 10 2014 019 076 A1 zeigt eine Hydraulikanordnung nach dem Oberbegriff des Anspruchs 1. Es wird eine Verteileinrichtung für einen Fluidvolumenstrom beschrieben, wobei zwei Verbraucher jeweils mit einem Volumenstrom verbunden sind. Die Regelung erfolgt über eine Drossel, die über eine Steuerleitung fluidisch mit dem zweiten Versorgungspfad verbunden ist.

DE 197 19 636 A1 zeigt eine Hydraulikanordnung mit einem Stromregelventil 20, das zwei Ausgänge aufweist. Die Abzweigung verläuft in ein weiteres Stromregelventil mit einer Drossel und in ein weiteres Regelventil. Dieser Abzweig ist nicht mit einem Verbraucher direkt verbunden. Die Regelung des Volumenstroms in dem Zweig, in dem das Fluidvolumenstrombegrenzungsventil sitzt, erfolgt nicht durch den Volumenstrom selbst.

Aus der EP 2 933 519 A2 ist eine Hydraulikeinrichtung für das Verteilen von Volumenströme auf eine elektrische Maschine und einen zweiten Verbraucher, der vorzugsweise eine Lamellen-Kupplungsanordnung darstellt bekannt.

Es ist daher eine Aufgabe der Erfindung, eine verbesserte Hydraulikanordnung für einen Kraftfahrzeugantriebsstrang anzugeben, bei dem zwei Fluidvolumenströme mittels einer Verteilungseinrichtung möglichst kostengünstig bedarfsweise einstellbar sind, wobei insbesondere zwei unterschiedliche Fluidvolumenstromaufteilungen realisierbar sind.

Die obige Aufgabe wird bei der eingangs genannten Hydraulikanordnung durch das im Anspruch 1 definierte Fluidvolumenstrombegrenzungsventil gelöst.

Ferner wird die obige Aufgabe gelöst durch einen Antriebsstrang für ein Kraftfahrzeug, wobei der Antriebsstrang eine Hydraulikanordnung der erfindungsgemäßen Art aufweist, wobei der erste Verbraucher vorzugsweise eine elektrische Maschine ist und/oder wobei der zweite Verbraucher vorzugsweise eine nasslaufende Lamellenkupplungsanordnung ist.

Ein Fluidvolumenstrombegrenzungsventil ist im einfachsten Fall ein Ventil, das bis zu einem bestimmten Volumenstrombegrenzungswert beliebige Fluidvolumenströme durch- lässt, ab Erreichen des Begrenzungswertes des Volumenstromes jedoch zumindest keine weitere Erhöhung des Volumenstromes zulässt.

Die Hydraulikanordnung weist einen ersten Zweig auf, über den der erste Fluidvolumenstrom geführt wird, und einen zweiten Zweig, über den der zweite Fluidvolumenstrom geführt wird.

In einem Fall könnte die Verteilungseinrichtung folglich dafür sorgen, dass der Gesamt- Fluidvolumenstrom entsprechend der hydraulischen Widerstände in den Zweigen aufgeteilt wird, die den ersten bzw. den zweiten Fluidvolumenstrom führen, wobei in einem der Zweige ein derartiges Fluidvolumenstrombegrenzungsventil angeordnet ist. Hierdurch kann erreicht werden, dass die Volumenströme sich entsprechend der hydraulischen Widerstände aufteilen, wobei sich bei Erreichen des Begrenzungs- Volumenstromes in dem Fluidvolumenstrombegrenzungsventil jedoch durch diese Begrenzung das Verhältnis der hydraulischen Widerstände in den zwei Zweigen ändert, so dass auf diese Weise eine geeignete Verteilung des Gesamt-Fluidvolumenstromes erreichbar ist.

Das Fluidvolumenstrombegrenzungsventil ist in einem der zwei Zweige angeordnet.

Das Fluidvolumenstrombegrenzungsventil ist rein hydraulisch gesteuert, beinhaltet also keine externe Ansteuerung, wie eine elektrische, eine pneumatische oder eine mechanische Ansteuerung.

Das Fluidvolumenstrombegrenzungsventil ist so angeschlossen, dass es von dem ersten oder dem zweiten Fluidvolumenstrom durchströmt wird. Ferner ist es vorgesehen, dass die hydraulische Steuerung des Fluidvolumenstrombegrenzungsventils über jenen Anschluss des Fluidvolumenbegrenzungsventils erfolgt, der mit der Fluidversorgungseinrichtung verbunden ist.

Das Fluidvolumenbegrenzungsventil kann dabei mittels einer Feder in eine Grundstellung vorgespannt sein.

Bei dem Fluidvolumenstrombegrenzungsventil handelt es sich vorzugsweise um ein solches Fluidstrombegrenzungsventil, bei dem sich der Durchfluss bis zu einem Begrenzungs-Volumenstrom und/oder -druck am Ventileingang wie ein offener Pfad verhält, bei Überschreiten dieses Begrenzungs-Volumenstroms bzw. -druckes der Durchfluss durch das Fluidvolumenstrombegrenzungsventil jedoch auf einen Wert eingeschränkt wird, der deutlich kleiner ist als der Begrenzungs-Volumenstrom, und beispielsweise auch vollständig schließen kann.

Derartige Ventile werden beispielsweise auch zu anderen Zwecken eingesetzt und sind als "Schlauchplatzventile" bekannt. Derartige Schlauchplatzventile werden beispielsweise beim Anschließen von Haushaltsgeräten an eine Wasserversorgung dazu verwendet, um bei einem Platzen des dem Ventil nachgeordneten Schlauches und einem Anstieg des
hierdurch fließenden Volumenstromes ein vollständiges Abschalten bzw. Sperren dieses Volumenstromes zu erreichen, um unerwünschten Wasseraustritt über längere Zeiträume zu vermeiden.

In einer Ausführungsform kann das Fluidvolumenstrombegrenzungsventil einen Haupt- und einen Nebenfluidpfad beinhalten, der vorzugsweise parallel zu dem Hauptfluidpfad eingerichtet ist. Hierbei kann eine Feder das Ventil bei niedrigen Volumenströmen vorzugsweise in einem geöffneten Zustand halten, so dass der Hauptfluidpfad und der Nebenfluidpfad durchströmt werden. Mit steigendem Volumenstrom bzw. Druck nehmen Strömungskräfte und Staudruck zu, wodurch der Hauptfluidpfad versperrt wird. Hierdurch kann der Volumenstrom hin zu jenem Verbraucher, innerhalb dessen Pfades ein solches Fluidvolumenstrombegrenzungsventil angeordnet ist, reduziert werden, wohin sich der Volumenstrom zu dem anderen Verbraucher erhöht.

Der Nebenfluidpfad muss nicht notwendigerweise vorhanden sein, sondern kann auch nicht vorhanden sein, so dass das Fluidvolumenstrombegrenzungsventil nur einen Hauptfluidpfad beinhaltet, der bei geringen Volumenströmen durchströmt wird, und bei Erreichen eines Begrenzungs- Volumenstromes bzw. eines Begrenzungs-Staudruckes vollständig gesperrt wird.

Wenn erfindungsgemäß ein Nebenfluidpfad vorhanden ist, so kann dieser beispielsweise durch eine Drossel oder eine Blende gebildet sein.

Die Aufgabe wird somit vollkommen gelöst.

Von besonderem Vorzug ist es bei der erfindungsgemäßen Hydraulikanordnung, wenn das Fluidvolumenstrombegrenzungsventil derart angeschlossen ist, dass in einer Grund- Ventilstellung ein erstes Verhältnis von erstem zu zweitem Fluidvolumenstrom eingerichtet wird, und wenn in einer Umschalt-Ventilstellung ein zweites Verhältnis von erstem zu zweitem Fluidvolumenstrom eingerichtet wird. Das erste und das zweite Verhältnis unterscheiden sich voneinander. Vorzugsweise sind die Verhältnisse so, dass der eine Fluidvolumenstrom von erstem und zweitem Fluidvolumenstrom in der Grund-Ventilstellung größer ist als der andere Fluidvolumenstrom, und dass es in der Umschalt-Ventilstellung genau umgekehrt ist, so dass der andere Fluidvolumenstrom größer ist als der zuerst genannte Fluidvolumenstrom.

Erfindungsgemäß weist das Fluidvolumenstrombegrenzungsventil einen in eine Grundposition vorgespannten Kolben auf, der von einem Beaufschlagungsdruck beaufschlagt wird, wobei der Kolben bei Überschreiten eines Schwellenwertes des Beaufschlagungsdruckes gegen die Vorspannung in eine Umschaltposition bewegt wird.

Der Beaufschlagungsdruck kann dabei beispielsweise eine Funktion des Gesamt-Volumenstromes sein und/oder eine Funktion einer Drehzahl eines Pumpenmotors sein, der eine Pumpe der Fluidversorgungseinrichtung antreibt.

Der Beaufschlagungsdruck kann unmittelbar an einer Kolbenfläche des Kolbens wirken. Der Kolben ist vorzugsweise in eine Richtung gegen die Strömungsrichtung durch das Volumenbegrenzungsventil hindurch vorgespannt.

Der Kolben kann ein klassischer Kolben sein, der mit einer Kolbenstange verbunden ist, die in einem Ventilgehäuse geführt ist. Der Kolben kann jedoch auch ein hohlzylindrisches Bauteil sein, das in einem Gehäuse von einer Komponente des Antriebsstranges geführt wird.

Ferner ist es vorteilhaft, wenn der Kolben in der Grundposition einen ersten Durchgangskanal freigibt oder sperrt, und in der Umschaltposition den ersten Durchgangskanal sperrt bzw. freigibt.

Der erste Durchgangskanal entspricht dabei vorzugsweise einem Hauptfluidpfad, wie oben erwähnt.

Erfindungsgemäß weist das Fluidvolumenstrombegrenzungsventil einen zweiten Durchgangskanal auf, der unabhängig von der Position des Kolbens offen ist und der vorzugsweise einen kleineren Durchflussquerschnitt aufweist als ein erster Durchgangskanal, dessen Durchflussquerschnitt von der Position des Kolbens abhängig ist.

Der zweite Durchgangskanal kann dabei einem oben besprochenen Nebenfluidpfad entsprechen.

Der zweite Durchgangskanal kann dabei parallel zu dem ersten Durchgangskanal angeordnet sein. Der zweite Durchgangskanal kann unabhängig von dem ersten Durchgangskanal durchströmt werden. Ferner kann der zweite Durchgangskanal Teil des ersten Durchgangskanals sein, derart, dass in einer Grundposition des Kolbens der erste Durchgangskanal durchströmt wird, und in der Umschaltposition des Kolbens ein Teil, vorzugsweise ein Großteil des Durchflussquerschnittes des ersten Durchgangskanales gesperrt wird, so dass der - verbleibende - zweite Durchgangskanal für einen Durchfluss zur Verfügung steht.

Der zweite Durchgangskanal erstreckt sich dabei durch den Kolben hindurch, und zwar entweder in axialer Richtung oder auch in radialer Richtung. Ferner ist es vorteilhaft, wenn das Fluidvolumenstrombegrenzungsventil beim Schließen eine andere Kennlinie aufweist als beim Öffnen.

Mit anderen Worten ist das Fluidvolumenstrombegrenzungsventil vorzugsweise hysteresebehaftet.

Daher ist es in manchen Ausführungsformen vorteilhaft, wenn die Fluidversorgungseinrichtung dann, wenn sich der Kolben in der Umschaltposition befindet, den von der Fluidversorgungseinrichtung bereitgestellten Gesamt-Volumenstrom deutlich unter einen Begrenzungs-Volumenstrom reduziert, um zu erreichen, dass der Kolben mittels der Vorspannung (in der Regel eine Federvorspannung) sicher wieder in die Grundposition zurückgelangt.

Die Verteilungseinrichtung kann kostengünstig realisiert werden, da nur ein Ventil notwendig ist, das vorzugsweise zudem rein hydraulisch angesteuert ist und folglich keinen Ausgang eines Steuergerätes belegt. Auch kann eine Pumpe in der Fluidversorgungseinrichtung als einfache Pumpe ohne Ringelement bzw. Umschlagring ausgebildet sein. Die Pumpe kann auch eine unidirektionale Pumpe sein. Die Pumpe der Fluidversorgungseinrichtung wird vorzugsweise von einem elektrischen Motor angetrieben.

Zum Öffnen des Ventils, d.h. zum Versetzen des Kolbens von der Umschaltposition in die Grundposition ist es vorteilhaft, wenn ein solcher elektrischer Motor einer Pumpe der Fluidversorgungseinrichtung angehalten wird oder rückwärts betrieben wird.

Eine Hysterese des Fluidvolumenstrombegrenzungsventils kann ein "Flattern" des Ventils vorzugsweise verhindern.

Bei dem erfindungsgemäßen Antriebsstrang ist der erste Verbraucher vorzugsweise eine elektrische Maschine, und zwar insbesondere eine elektrische Antriebsmaschine, die Antriebsdrehmoment für das Kraftfahrzeug bereitstellt. Diese wird in der Regel dauerhaft durchströmt, und zwar vorzugsweise in der Grund-Ventilstellung des Fluidvolumenbegrenzungsventils. Solange Antriebsleistung erforderlich ist, wird daher die elektrische Maschine mit einem relativ großen Volumenstrom gekühlt, und ein Volumenstrom einer nasslaufenden Lamellenkupplung, die vorzugsweise den zweiten Verbraucher bildet, ist relativ gering. Während des Bereitstellens von Antriebsleistung ist eine solche Lamellenkupplungsanordnung in der Regel geschlossen oder geöffnet, so dass eine hohe Kühlleistung in der Lamellenkupplungsanordnung nicht erforderlich ist.

Wenn andererseits eine solche hohe Kühlleistung erforderlich ist, wenn also
beispielsweise ein Gangwechsel stattfindet, in dem die Lamellenkupplungsanordnung im Schlupf betrieben wird, wird der Gesamtvolumenstrom erhöht, wodurch das Fluidvolumenstrombegrenzungsventil vorzugsweise von der Grund-Ventilstellung in die Umschalt-Ventilstellung umgeschaltet wird, so dass nun ein Großteil des Gesamt-Volumenstromes zu der nasslaufenden Lamellenkupplungsanordnung gefördert wird.

Von besonderem Vorzug ist es bei dem erfindungsgemäßen Antriebsstrang folglich, wenn das Fluidvolumenstrombegrenzungsventil in jenem Fluidpfad angeordnet ist, über den der erste Fluidvolumenstrom zu der elektrischen Maschine geführt wird.

Generell ist es zwar auch denkbar, ein solches Fluidvolumenstrombegrenzungsventil in jenem Pfad anzuordnen, der der nasslaufenden Lamellenkupplungsanordnung zugeordnet ist. Hierbei kann jedoch eine schlagartige Volumenstromerhöhung in Richtung hin zu der nasslaufenden Lamellenkupplungsanordnung in der Regel nicht so einfach realisiert werden.

Die elektrische Maschine kann in Phasen einer solchen schlupfenden Betätigung der Lamellenkupplungsanordnung vorzugsweise von der Leistung her reduziert oder sogar abgeschaltet werden, so dass der in der elektrischen Maschine während solcher Zeiträume benötigte Kühl-Fluidvolumenstrom reduziert ist.

Die Hydraulikanordnung dient insgesamt vorzugsweise zum Kühlen von hydraulischen Verbrauchern, wobei der erste Verbraucher oder der zweite Verbraucher auch eine andere Komponente des Antriebsstranges sein kann, wie beispielsweise ein Stufengetriebe, ein kontinuierlich variables Getriebe, oder auch ein Achsgetriebe oder dergleichen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den in den Ansprüchen definierten

Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung einer Ausführungsform einer erfindungsgemäßen Hydraulikanordnung;
Fig.2 eine schematische Darstellung einer Ausführungsform eines erfindungsgemäßen Antriebsstranges;
Fig. 3 ein Diagramm von Volumenstrom (beispielsweise in I/min) über einer Drehzahl eines Antriebsmotors einer Pumpe einer Fluidversorgungseinrichtung;
Fig. 4 eine schematische Längsschnittansicht durch eine Ausführungsform eines Fluidvolumenstrombegrenzungsventils für eine erfindungsgemäße Hydraulikanordnung;
Fig. 5 eine schematische Darstellung einer weiteren Ausführungsform eines Fluidvolumenstrombegrenzungsventils für eine erfindungsgemäße Hydraulikanordnung;
Fig. 6 eine schematische perspektivische Ansicht einer weiteren Ausführungsform eines Fluidvolumenstrombegrenzungsventils für eine erfindungsgemäße Hydraulikanordnung;
Fig. 7 eine schematische Längsschnittansicht durch das Fluidvolumenstrombegrenzungsventil der Fig. 6; und
Fig. 8 eine schematische Längsschnittansicht durch eine weitere Ausführungsform eines Fluidvolumenstrombegrenzungsventils für eine erfindungsgemäße Hydraulikanordnung.

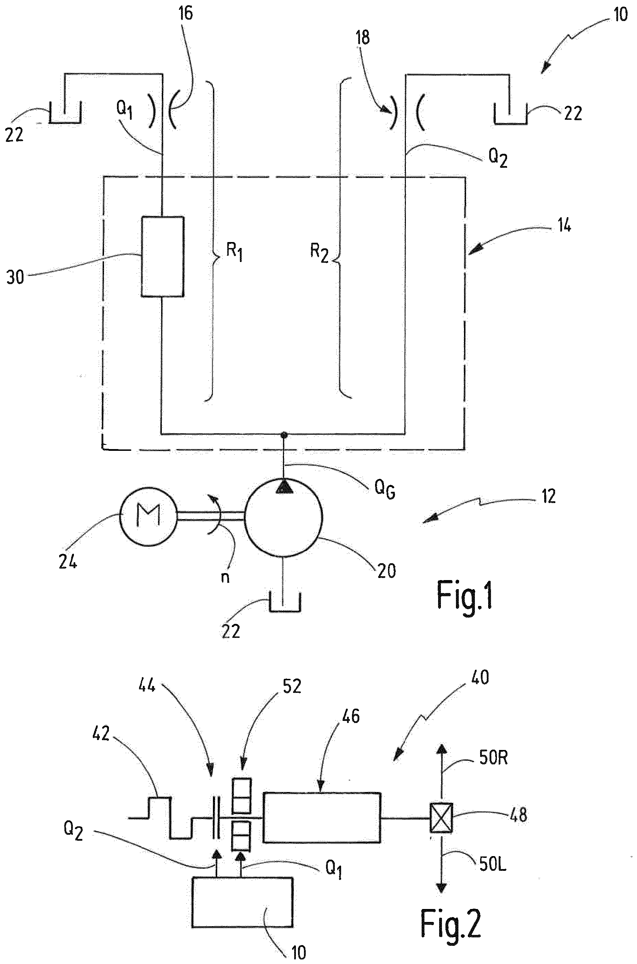

In Fig. 1 ist eine Ausführungsform einer erfindungsgemäßen Hydraulikanordnung dargestellt und generell mit 10 bezeichnet.

Die Hydraulikanordnung 10 beinhaltet eine Fluidversorgungseinrichtung 12, die dazu ausgebildet ist, einen variablen Gesamt-Fluidvolumenstrom Q_{G} bereitzustellen. Die Hydraulikanordnung 10 beinhaltet ferner eine Verteilungseinrichtung 14, die dazu ausgebildet ist, den von der Fluidversorgungseinrichtung 12 bereitgestellten Gesamt-Fluidvolumenstrom Q_{G} aufzuteilen, und zwar in einen ersten Fluidvolumenstrom Q₁ für einen ersten hydraulischen Verbraucher 16 und einen zweiten Fluidvolumenstrom Q₂ für einen zweiten hydraulischen Verbraucher 18.

Der erste hydraulische Verbraucher 16 ist vorzugsweise eine elektrische
Antriebsmaschine eines Kraftfahrzeugantriebsstranges. Der zweite hydraulische Verbraucher 18 ist vorzugsweise eine nasslaufende Lamellenkupplung eines Antriebsstranges eines Kraftfahrzeuges.

Die Verbraucher 16, 18 sind in Fig. 1 schematisch als Blenden bzw. hydraulische Widerstände dargestellt.

Das Verhältnis der Fluidvolumenströme Q₁, Q₂ hängt maßgeblich von den hydraulischen Widerständen P, R₂ ab, die in einem ersten Fluidpfad bzw. einem zweiten Fluidpfad eingerichtet sind, in denen die Fluidvolumenströme Q₁, Q₂ geführt werden.

Die Fluidversorgungseinrichtung 12 weist vorzugsweise eine Pumpe 20 auf, die als unidirektionale Pumpe ausgebildet sein kann, jedoch auch als bidirektionale Pumpe ausgebildet sein kann. Die Pumpe 20 weist einen Sauganschluss auf, der mit einem Fluidsumpf 22 oder einer sonstigen Niederdruckquelle für Fluid verbunden ist. Ferner beinhaltet die Pumpe 20 einen Druckanschluss, an dem der Gesamt-Fluidvolumenstrom Q_{G} bereitgestellt wird. Die Pumpe 20 wird von einem elektrischen Motor 24 angetrieben, der mit einer Drehzahl n dreht, wobei die Drehzahl n variabel eingestellt werden kann.

Folglich kann auch der Gesamt-Volumenstrom Q_{G} variabel einstellbar sein.

In dem Pfad, der von dem Druckanschluss der Pumpe 20 zu dem ersten hydraulischen Verbraucher 16 führt, ist ein Fluidvolumenstrombegrenzungsventil 30 angeordnet. Dieses Fluidvo!umenstrombegrenzungsventil 30 wird bei Erreichen eines Begrenzungs-Volumenstromes Qs durch den ersten Fluidvolumenstrom Q₁ von einer Grund-Ventilstellung in eine Umschalt-Ventilstellung umgeschaltet.

In der Umschalt-Ventilstellung ist der Durchfluss durch das Fluidvolumenstrombegrenzungsventil 30 auf einen Wert unterhalb jenes Volumenstrom-Wertes begrenzt, der vor Erreichen des Begrenzungs-Volumenstromes durch das Fluidvolumenstrombegrenzungs-ventil 30 geströmt ist.

Folglich kann das Verhältnis Q₁/Q₂ von erstem zu zweitem Fluidvolumenstrom allein durch Erreichen eines Begrenzungs-Fluidvolumenstromes verändert werden, insbesondere umgekehrt werden.

In der Grund-Ventilstellung des Fluidvolumenstrombegrenzungsventils 30 wird daher dem ersten hydraulischen Verbraucher 16 ein vorzugsweise größerer Volumenstrom bereitgestellt, so dass Q₁ > Q₂. Wenn das Fluidvolumenstrombegrenzungsventil 30 sich in der Umschalt-Ventilstellung befindet, gilt vorzugsweise Q₂ > Q₁.

In Fig. 2 ist ein Antriebsstrang 40 für ein Kraftfahrzeug dargestellt, der einen ersten Antriebsmotor 42, beispielsweise in der Form eines Verbrennungsmotors beinhaltet, sowie eine Kupplungsanordnung 44, die als Einfach- oder als Doppelkupplungsanordnung ausgebildet sein kann, vorzugsweise jedoch wenigstens eine nasslaufende Lamellenkupplung beinhaltet. Ein Ausgang der Kupplungsanordnung 44 ist mit einem Eingang einer Getriebeanordnung 46 verbunden. Ein Ausgang der Getriebeanordnung 46 ist mit einem Differential 48 verbunden, mittels dessen Antriebsleistung auf angetriebene Räder 50L, 50R verteilbar ist.

Der Antriebsstrang 40 beinhaltet ferner eine elektrische Maschine 52, die als Antriebsmotor betreibbar ist, um Antriebsleistung bereitzustellen.

Der Antriebsstrang 40 beinhaltet ferner eine Hydraulikanordnung 10, die für die elektrische Maschine 52 einen ersten Kühlfluidvolumenstrom Q₁ bereitstellt, und für die nasslaufende Lamellenkupplung der Kupplungsanordnung 44 einen zweiten Fluidvolumenstrom Q₂ bereitstellt. Die Hydraulikanordnung 10 entspricht hinsichtlich Aufbau und Funktionsweise vorzugsweise der unter Bezugnahme auf Fig. 1 beschriebenen Hydraulikanordnung 10.

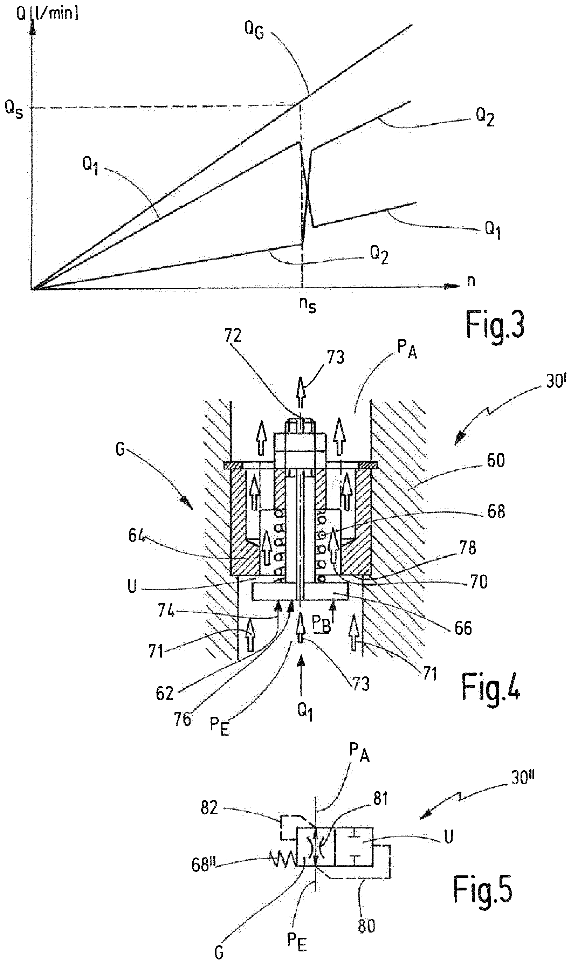

Fig. 3 zeigt die Funktionsweise eines Fluidvolumenstrombegrenzungsventils 30, wie es in der Hydraulikanordnung 10 der Fig. 1 verwendbar ist. Fig. 3 zeigt ein Diagramm von Volumenstrom (beispielsweise in I/min) über der Drehzahl n des elektrischen Motors 24, der die Pumpe 20 antreibt.

Der Gesamt- Volumenstrom Q_{G} nimmt linear mit Anstieg der Drehzahl n der Pumpe 20 zu. Diese Darstellung ist idealisiert. In der Praxis können auch andere Kennlinien eingerichtet werden.

Bis zu einer Drehzahl nₛ wird der Gesamt-Fluidvolumenstrom Q_{G} mittels der Verteilungseinrichtung 14 in einen ersten Fluidvolumenstrom und einen zweiten Volumenstrom Q₂ aufgeteilt, wobei Q₁ vorzugsweise größer ist als Q₂. Wenn die Drehzahl nₛ überschritten wird, übersteigt der erste Fluidvolumenstrom Q₁ einen Begrenzungs-Fluidstrom Qₛ, was bewirkt, dass das Fluidstrombegrenzungsventil 30 von der Grund-Ventilstellung in eine Umschalt- Ventilstellung umgeschaltet wird. Hierdurch wird der erste Fluidvolumenstrom Q₁ begrenzt, und zwar so, dass der Gesamt-Fluidvolumenstrom Q_{G} nunmehr in einen kleineren ersten Fluidvolumenstrom Q₁ und einen größeren zweiten Fluidvolumenstrom Q₂ aufgeteilt wird.

Bei Erreichen der Drehzahl nₛ kann folglich der Fluidvolumenstrom, der der nasslaufenden Lamellenkupplung der Kupplungsanordnung 44 zugeführt wird, schlagartig ansteigen, um für den Fall eines kurzzeitigen schlupfenden Betriebes eine hohe Kühlleistung bereitstellen zu können.

In den nachfolgenden Fig. 4 bis 8 sind weitere Ausführungsformen von Fluidvolumenstrombegrenzungsventilen dargestellt, die hinsichtlich Aufbau und Funktionsweise generell dem oben beschriebenen Fluidstrombegrenzungsventil 30 entsprechen. Gleiche Elemente sind daher durch gleiche Bezugszeichen gekennzeichnet. Im Folgenden werden im Wesentlichen Unterschiede erläutert.

Fig. 4 zeigt einen Ausschnitt aus einem Antriebsstrang-Gehäuseabschnitt 60, durch den hindurch ein Strömungskanal 62 eingerichtet ist. In den Strömungskanal 62 ist ein Ventilgehäuse 64 eines Fluidvolumenstrombegrenzungsventils 30' eingesetzt, beispielsweise eingeschraubt. Das Fluidvolumenstrombegrenzungsventil 30' beinhaltet ferner ein
Schließelement 66 in Form eines Kolbens, der an dem Ventilgehäuse 64 längsverschieblich, d.h. parallel zur Strömungskanalrichtung 62 verschieblich gelagert ist. Das Schließelement 66 ist dabei mittels einer Feder 68 in eine Grund-Ventilstellung G vorgespannt, wie sie in Fig. 4 in durchgezogenen Linien gezeigt ist. Hierbei ist das Schließelement 66 in einer Position, bei der an dem Schließelement 66 vorbei ein erster Durchgangskanal 70 mit einem relativ großen Querschnitt eingerichtet ist, durch den eine erste Teilströmung 71 strömen kann. Das Schließelement 66 selber beinhaltet eine axial durchgehende Öffnung, die einen zweiten Durchgangskanal 72 nach der Art einer Drossel bildet, durch den hindurch eine zweite Teilströmung 73 strömen kann.

Sofern das Fluidvolumenstrombegrenzungsventil 30' in den Pfad eingesetzt ist, der zu dem ersten hydraulischen Verbraucher 16 führt, so teilt sich der erste Fluidvolumenstrom Q₁ in die erste Teilströmung 71 und die zweite Teilströmung 73 auf, wenn sich das Schließelement 66 in der Grund-Ventilstellung G befindet. Mit zunehmendem erstem Fluidvolumenstrom Q₁ steigt an dem Schließelement 66 ein Staudruck P_{B}, der in der Regel als Differenz zwischen einem Eingangsdruck P_{E} auf der Eingangsseite des Ventils 30 und einem Ausgangsdruck P_{A} des Ventils 30' berechnet werden kann.

Wenn dieser Staudruck P_{B}, mittels dessen eine Beaufschlagungskraft 74 auf das Schließelement 66 ausgeübt wird, die entgegengesetzt ist zu der Vorspannungskraft der Feder 68, einen Schwellenwert überschreitet, wird das Schließelement 66 in eine in Fig. 4 schematisch angedeutete Umschalt-Ventilstellung U bewegt, bei der das Schließelement 66 an einen Ventilsitz 78 des Ventilgehäuses 64 gedrückt wird, um auf diese Weise den ersten Durchgangskanal 70 zu verschließen. Die Beaufschlagungskraft 74 ist in der Regel eine Funktion der Fläche 76 des Schließelementes 66.

In der Umschalt-Ventilstellung U kann folglich nur noch die zweite Teilströmung 73 von dem Eingang zu dem Ausgang des Ventils strömen, so dass aufgrund von der Drosselcharakteristik des zweiten Durchgangskanals 72 der erste Fluidvolumenstrom abfällt.

Folglich teilt sich der Gesamt- Volumenstrom Q_{G} nunmehr so auf, dass zu dem ersten hydraulischen Verbraucher 16 nur noch der geringe erste Fluidvolumenstrom strömen kann, wohingegen nunmehr zu dem zweiten hydraulischen Verbraucher 18 ein deutlich höherer zweiter Volumenstrom Q₂ strömen kann.

Fig. 5 zeigt eine schematische Darstellung einer weiteren Ausführungsform eines Fluidvolumenstrombegrenzungsventils 30", bei dem ersichtlich ist, dass von dem Bereich des Eingangs (bei P_{E}) eine Direktwirkung 80 auf das Ventil 30" wirkt, um dieses gegen eine Federkraft von der Grund-Ventilstellung G in eine Umschalt-Ventilstellung U zu überführen.

Bei dem Fluidvolumenstrombegrenzungsventil 30" kann durch das Ventil in der Umschalt- Ventilstellung U beispielsweise gar kein Volumenstrom mehr strömen. Das Ventil 30" sperrt folglich in der Umschalt-Ventilstellung U.

In der Grund-Ventilstellung kann das Fluidvolumenstrombegrenzungsventil 30" entweder den gesamte Volumenstrom Q₁ durchlassen, oder aber einen durch eine Blende 81 oder dergleichen begrenzten Volumenstrom.

In Fig. 5 ist ferner eine zweite Direktwirkung 82 gezeigt, die mit dem Ausgang P_{A} verbunden ist und die parallel mit der Federvorspannung 68" in die gleiche Richtung wie diese wirkt.

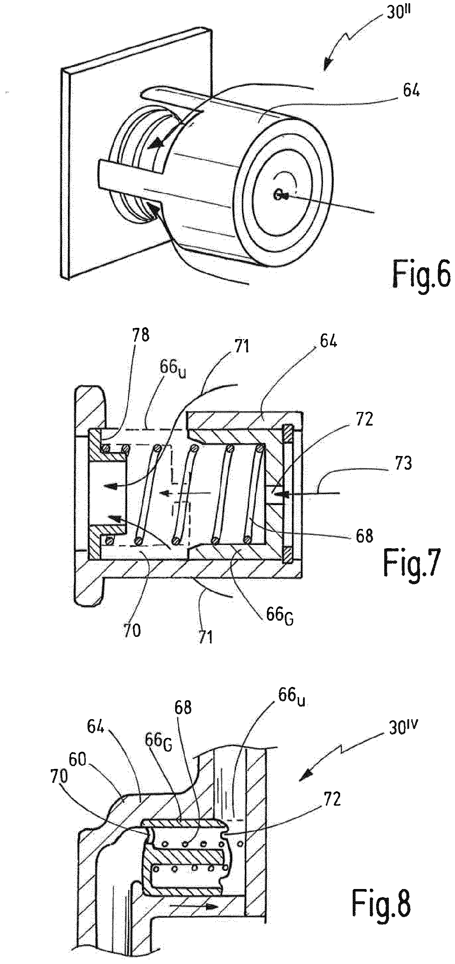

In der Fig. 6 und 7 ist eine weitere Ausführungsform 30'" gezeigt, bei der an einer Gehäusewand ein Ventilsitzelement 78 eingesetzt ist, das einen Zylindervorsprung aufweist, an dessen Außenumfang die Feder 68 geführt ist. In Fig. 7 ist das Fluidvolumenstrombegrenzungsventil 30'" in der Grund-Ventilstellung G gezeigt, bei der sich das Schließelement 66 in Form eines hohlzylindrischen Kolbens in einer Grundposition 66G befindet. In dieser kann durch eine zentrale Öffnung des Ventilsitzelementes 78 sowohl eine erste Teilströmung 71 fließen, für die ein großer Querschnitt eingerichtet ist, sowie eine zweite Teilströmung 73, die durch einen Drosselabschnitt an einem axialen Boden des Kolbens 66 ausgebildet ist.

In der gestrichelt dargestellten Umschaltposition 66u des Kolbens wird der große Querschnitt des ersten Durchgangskanals 70 vollständig gesperrt, so dass Fluid nur noch durch den zweiten Durchgangskanal 72 strömen kann.

Das Ventilgehäuse 64 ist ebenfalls als hohlzylindrisches Element ausgebildet, innerhalb dessen der hohlzylindrische Kolben 66 axial geführt ist, wobei das Ventilgehäuse 64 Radialöffnungen aufweist, über die die erste Teilströmung 71 strömen kann.

Fig. 8 zeigt eine weitere Ausführungsform eines Fluidvolumenstrombegrenzungsventils 30^{Iv}, bei dem ein hohlzylindrischer Kolben, der in einer Grundposition 66_{G} gezeigt ist, in einem Antriebsstranggehäuseabschnitt 60 geführt ist, der gleichzeitig das Ventilgehäuse 64 bildet. Der Kolben wird bei Erreichen des Begrenzungs-Volumenstromes in der Darstellung der Fig. 8 nach rechts gegen eine Wand gedrückt, derart, dass erste Durchgangskanäle 70, die axial am Boden des Kolbens ausgebildet sind, im Wesentlichen verschlossen werden, bis auf kleine zweite Durchgangskanäle 72, die am Randbereich des Kolbens ausgebildet sind.

## Patentansprüche

1. Hydraulikanordnung (10) für einen Kraftfahrzeugantriebsstrang (40), der einen ersten hydraulischen Verbraucher (16; 52) und einen zweiten hydraulischen Verbraucher (18; 44) aufweist, wobei der erste Verbraucher (16; 52) bedarfsweise mit einem ersten Fluidvolumenstrom (Q₁) zu versorgen ist und wobei der zweite Verbraucher (18; 44) bedarfsweise mit einem zweiten Fluidvolumenstrom (Q₂) zu versorgen ist, wobei die Hydraulikanordnung aufweist:
eine Fluidversorgungseinrichtung (12), die dazu ausgebildet ist, einen Gesamt-Fluidvolumenstrom (Q_{G}) bereit zu stellen;
eine Verteilungseinrichtung (14), die an die Fluidversorgungseinrichtung (12) angeschlossen und dazu ausgebildet ist, den von der Fluidversorgungseinrichtung (12) bereit gestellten Gesamt-Fluidvolumenstrom (Q_{G}) aufzuteilen, so dass der erste Verbraucher (16; 32) mit dem ersten Fluidvolumenstrom (Q₁) versorgt werden kann und der zweite Verbraucher (18; 44) mit dem zweiten Fluidvolumenstrom (Q₂) versorgt werden kann,
wobei die Verteilungseinrichtung (14) ein Fluidvolumenstrombegrenzungsventil (30) aufweist, wobei das Fluidbegrenzungsventil (30) keine externe Ansteuerung beinhaltet und so angeschlossen ist, dass es von dem ersten (Q₁) oder dem zweiten (Q₂) Fluidvolumenstrom durchströmt wird, und eine hydraulische Steuerung des Fluidvolumenstrombegrenzungsventils (30) über jenen Anschluss des Fluidvolumenbegrenzungsventils (30) erfolgt, der mit der Fluidversorgungseinrichtung (12) verbunden ist, wobei das Fluidvolumenstrombegrenzungsventil (30) einen in eine Grundposition (66_{G}) vorgespannten Kolben (66) aufweist, der von einem Beaufschlagungsdruck (P_{B}) beaufschlagt wird, wobei der Kolben (66) bei Überschreiten eines Schwellenwertes des Beaufschlagungsdruckes (P_{B}) gegen die Vorspannung in eine Umschaltposition (66u) bewegt wird und wobei das Fluidvolumenstrombegrenzungsventil (30) einen ersten Durchgangskanal (70), dessen Durchflussquerschnitt von der Position des Kolbens (66) abhängig ist, und einen zweiten Durchgangskanal (72) aufweist, der unabhängig von der Position des Kolbens (66) offen ist und der vorzugsweise einen kleineren Durchflussquerschnitt aufweist als der erste Durchgangskanal (70) und sich durch den Kolben (66) hindurch erstreckt.

2. Hydraulikanordnung nach Anspruch 1, **dadurch gekennzeichnet, dass** das Fluidvolumenstrombegrenzungsventil (30) derart angeschlossen ist, dass in einer Grund-Ventilstellung (G) ein erstes Verhältnis von erstem Fluidvolumenstrom (Q₁) zu zweitem Fluidvolumenstrom (Q₂) eingerichtet wird und in einer Umschalt-Ventilstellung (U) ein zweites Verhältnis von erstem Fluidvolumenstrom (Q₁) zu zweitem Fluidvolumenstrom (Q₂) eingerichtet wird.

3. Hydraulikanordnung nach Anspruch 1, **dadurch gekennzeichnet, dass** der Beaufschlagungsdruck (P_{B}) eine Funktion des Gesamt-Volumenstroms (Q_{G}) ist.

4. Hydraulikanordnung nach Anspruch 1 oder 3, **dadurch gekennzeichnet, dass** der Kolben (66) in der Grundposition (66_{G}) einen ersten Durchgangskanal (70) freigibt oder sperrt, und in der Umschaltposition (66_{U}) den ersten Durchgangskanal (70) sperrt bzw. freigibt.

5. Hydraulikanordnung nach einem der Ansprüche 1 - 4, **dadurch gekennzeichnet, dass** das Fluidvolumenstrombegrenzungsventil (30) beim Schließen eine andere Kennlinie aufweist als beim Öffnen.

6. Antriebsstrang (40) für ein Kraftfahrzeug, mit einer Hydraulikanordnung (10) nach einem der Ansprüche 1 - 5, wobei der erste Verbraucher vorzugsweise eine elektrische Maschine (52) ist und/oder wobei der zweite Verbraucher vorzugsweise eine nasslaufende Lamellenkupplungsanordnung (44) ist.

## Claims

1. Hydraulic assembly (10) for a motor vehicle drivetrain (40) which has a first hydraulic consumer (16; 52) and a second hydraulic consumer (18; 44), wherein the first consumer (16; 52) when required is to be supplied with a first volumetric fluid flow (Q₁), and wherein the second consumer (18; 44) when required is to be supplied with a second volumetric fluid flow (Q₂), wherein the hydraulic assembly has:
a fluid supply installation (12) which is configured for providing an overall volumetric fluid flow (Q_{G});
a distribution installation (14) which is connected to the fluid supply installation (12) and is configured for dividing the overall volumetric fluid flow (Q_{G}) provided by the fluid supply installation (12) such that the first consumer (16; 32) can be supplied with the first volumetric fluid flow (Q₁), and the second consumer (18; 44) can be supplied with the second volumetric fluid flow (Q2);
wherein the distribution installation (14) has a fluid volume limiting valve (30), wherein the fluid volume limiting valve (30) does not include any external actuation and is connected such that the first volumetric fluid flow (Q₁) or the second volumetric fluid flow (Q₂) passes through said fluid volume limiting valve (30), and hydraulic controlling of the fluid volume limiting valve (30) takes place by way of that connector of the fluid volume limiting valve (30) that is connected to the fluid supply installation (12), wherein the fluid volume limiting valve (30) has a piston which is pre-tensioned to a basic position (66_{G}) and which is impinged by an impingement pressure (P_{B}), wherein the piston (66) when exceeding a threshold value of the impingement pressure (P_{B}) is moved counter to the pre-tensioning to a switchover position (66_{U}), and wherein the fluid volume limiting valve (30) has a first passage duct (70), the flow cross section of the latter depending on the position of the piston (66), and a second passage duct (72) which is open independently of the position of the piston (66) and which preferably has a flow cross section which is smaller than that of the first passage duct (70) and extends through the piston (66).

2. Hydraulic assembly according to Claim 1, **characterized in that** the fluid volume limiting valve (30) is connected in such a manner that a first ratio between the first volumetric fluid flow (Q₁) and the second volumetric fluid flow (Q₂) is established in a basic valve position (G), and a second ratio between the first volumetric fluid flow (Q₁) and the second volumetric fluid flow (Q₂) is established in a switchover valve position (U).

3. Hydraulic assembly according to Claim 1, **characterized in that** the impingement pressure (P_{B}) is a function of the overall volumetric flow (Q_{G}).

4. Hydraulic assembly according to Claim 1 or 3, **characterized in that** the piston (66) in the basic position (66_{G}) releases or blocks, respectively, a first passage duct (70), and in the switchover position (66_{U}) blocks or releases, respectively, the first passage duct (70).

5. Hydraulic assembly according to one of Claims 1 to 4, **characterized in that** the fluid volume limiting valve (30) when closing has a different characteristic line than when opening.

6. Drivetrain (40) for a motor vehicle, having a hydraulic assembly (10) according to one of Claims 1 to 5, wherein the first consumer preferably is an electric machine (52) and/or wherein the second consumer preferably is a wet-running multi-disc clutch assembly (44).

## Revendications

1. Système hydraulique pour une chaîne cinématique de véhicule automobile (40), qui présente un premier consommateur hydraulique (16 ; 52) et un deuxième consommateur hydraulique (18 ; 44), le premier consommateur (16 ; 52) pouvant au besoin être alimenté avec un premier débit volumique de fluide (Q₁) et le deuxième consommateur (18 ; 44) pouvant au besoin être alimenté avec un deuxième débit volumique de fluide (Q₂), le système hydraulique présentant :
un dispositif d'alimentation en fluide (12) qui est réalisé pour fournir un débit volumique de fluide total (Q_{G}) ;
un dispositif de distribution (14) qui est raccordé au dispositif d'alimentation en fluide (12) et qui est réalisé de manière à diviser le débit volumique de fluide total (Q_{G}) fourni par le dispositif d'alimentation en fluide (12) de telle sorte que le premier consommateur (16 ; 32) puisse être alimenté avec le premier débit volumique de fluide (Q₁) et que le deuxième consommateur (18 ; 44) puisse être alimenté avec le deuxième débit volumique de fluide (Q₂),
le dispositif de distribution (14) présentant une soupape de limitation du débit volumique de fluide (30), la soupape de limitation de fluide (30) ne contenant pas de commande extérieure et étant raccordée de telle sorte qu'elle soit parcourue par le premier (Q₁) ou le deuxième (Q₂) débit volumique de fluide, et une commande hydraulique de la soupape de limitation du débit volumique de fluide (30) s'effectuant par le biais du raccordement de la soupape de limitation du débit volumique de fluide (30) qui est connecté au dispositif d'alimentation en fluide (12), la soupape de limitation du débit volumique de fluide (30) présentant un piston (66) précontraint dans une position de base (66_{G}), qui est sollicité par une pression de sollicitation (P_{B}), le piston (66), lors du dépassement d'une valeur seuil de la pression de sollicitation (P_{B}), étant déplacé dans une position de commutation (66u) à l'encontre de la précontrainte, et
la soupape de limitation du débit volumique de fluide (30) présentant un premier canal de passage (70) dont la section transversale d'écoulement dépend de la position du piston (66), et un deuxième canal de passage (72) qui est ouvert indépendamment de la position du piston (66) et qui présente de préférence une plus petite section transversale d'écoulement que le premier canal de passage (70) et qui s'étend à travers le piston (66).

2. Système hydraulique selon la revendication 1, **caractérisé en ce que** la soupape de limitation du débit volumique de fluide (30) est raccordée de telle sorte que dans une position de base (G) de la soupape, un premier rapport du premier débit volumique de fluide (Q₁) au deuxième débit volumique de fluide (Q₂) soit établi et que dans une position de commutation (U) de la soupape, un deuxième rapport du premier débit volumique de fluide (Q₁) au deuxième débit volumique de fluide (Q₂) soit établi.

3. Système hydraulique selon la revendication 1, **caractérisé en ce que** la pression de sollicitation (P_{B}) est une fonction du débit volumique total (Q_{G}).

4. Système hydraulique selon la revendication 1 ou 3, **caractérisé en ce que** le piston (66), dans la position de base (66_{G}), libère ou bloque un premier canal de passage (70), et dans la position de commutation (66_{U}), bloque ou libère le premier canal de passage (70).

5. Système hydraulique selon l'une quelconque des revendications 1 à 4, **caractérisé en ce que** la soupape de limitation du débit volumique de fluide (30) présente, lors de sa fermeture, une autre caractéristique que lors de son ouverture.

6. Chaîne cinématique (40) pour un véhicule automobile comprenant un système hydraulique (10) selon l'une quelconque des revendications 1 à 5, dans lequel le premier consommateur est de préférence une machine électrique (52) et/ou dans lequel le deuxième consommateur est de préférence un système d'embrayage à disques humide (44).
